# FASCICULE DE BREVET EUROPEEN

(11) **EP 3 221 184 B1**
(45) Date de publication et mention de la délivrance du brevet: **18.11.2020**
(21) Numéro de dépôt: 15808775.9
(22) Date de dépôt: 20.11.2015
(51) Int. Cl.: B60P 3/10, B63C 3/12

(54) **REMORQUE POUR LA MISE À L'EAU ET LA MANUTENTION D'EMBARCATION LÉGÈRES**
ANHÄNGER ZUM AUSSETZEN UND HANDHABEN VON LEICHTGEWICHTIGEN BOOTEN
TRAILER FOR LAUNCHING AND HANDLING LIGHTWEIGHT BOATS

(30) Priorité: 21.11.2014 FR 1461302
(43) Date de publication de la demande: 27.09.2017
(73) Titulaire: Hasdenteufel, Pierre, 06200 Nice (FR)
(72) Inventeur: Hasdenteufel, Pierre, 06200 Nice (FR)
(74) Mandataire: Roche, von Westernhagen & Ehresmann
(86) Numéro de dépôt international: PCT/IB2015/002190
(87) Numéro de publication internationale: WO 2016/079587

(56) Documents cités:
- FR-A1- 2 614 004
- FR-A1- 2 879 554
- FR-A5- 2 098 750
- US-A- 4 676 330

## Description

### DOMAINE DE L'INVENTION

L'invention se rapporte au domaine général des dispositifs de manutention permettant de déplacer des objets lourds et/ou encombrants et en particulier des dispositifs pour la manutention à terre d'embarcations.

L'invention est plus particulièrement destinée à la manutention d'embarcations dites "légères" pour les opérations de mise à l'eau et de remontée à terre de telles embarcations.

### CONTEXTE DE L'INVENTION - ART ANTERIEUR

Dans le contexte particulier de la navigation de plaisance ou plus généralement de la navigation sur des embarcations légères, l'utilisateur d'une telle embarcation est, dans certain cas, amené, pour pouvoir accéder au plan d'eau sur lequel il veut naviguer, à mettre son embarcation à l'eau depuis le rivage sans pouvoir recourir à des installations de mise à l'eau telles que celle qu'il peut trouver dans des ports ou des embarcadères (rampes de mise à l'eau carrossables, moyens de levage, etc..).

C'est en particulier le cas si l'embarcation est amenée à proximité du plan d'eau sur une remorque tractée par un véhicule depuis un chemin carrossable n'offrant pas un accès direct au rivage, le chemin carrossable étant par exemple séparé du rivage par une prairie elle-même non carrossable. C'est également le cas si le lieu de dépose ou de stockage de l'embarcation est séparé du rivage par une plage de sable, parfois très étendue à marée basse, ou une zone de sol très meuble, par nature non accessible à un véhicule ou à une remorque standard.

Dans un tel contexte il est nécessaire, soit de réaliser le portage de l'embarcation à la main, soit d'utiliser une remorque annexe spécialement conçue pour pouvoir traverser des zones de terrain inaccessibles à une remorque standard telle que celles permettant de transporter une embarcation par la route.

Il existe à l'heure actuelle des remorques annexes permettant la mise à l'eau d'une embarcation légère. Elles sont généralement conçues de façon à être légères et capables de circuler avec leur chargement sur des terrains non carrossables. Elles sont également généralement pourvues de moyens de préhension qui permettent de les déplacer à la main, sans l'aide d'un véhicule tracteur.

Cependant il existe des circonstances où de telles remorques annexes sont d'un usage malaisé. C'est en particulier le cas lorsque l'embarcation "légère" présente un poids relativement important et/ou que le terrain est particulièrement irrégulier ou meuble. Dans ce cas, amener à l'eau ou ramener à terre l'embarcation considérée demande à l'utilisateur une grande dépense d'énergie même si la remorque est bien adaptée au déplacement sur sol irrégulier. L'utilisateur est alors généralement contraint de faire appel à une tierce personne pour l'aider à déplacer son embarcation entre son lieu de stockage ou de dépose et le bord du rivage, de sorte qu'il perd son autonomie.

Le document US 4 676 330 A divulgue une remorque selon le préambule de la revendication 1.

### PRESENTATION DE L'INVENTION

Un but de l'invention est de proposer un moyen qui permette de déplacer de manière autonome, sans l'utilisation d'un véhicule tracteur, une embarcation dans la zone qui sépare son lieu de stockage ou de dépose du bord de l'eau, et qui puisse être mis en oeuvre facilement par une personne seule, même en terrain difficile.

A cet effet l'invention a pour objet une remorque pour le déplacement sur terre et la mise à l'eau d'une embarcation légère comportant un train roulant porteur motorisé, configuré pour supporter la coque de l'embarcation, prolongé par une arête longitudinale terminée par un timon comportant une poignée de manœuvre, en particulier à l'une de ses extrémités, l'arête longitudinale et le timon étant disposés transversalement par rapport à l'axe du train roulant porteur. Selon un premier aspect de l'invention selon la revendication no. 1 le train roulant porteur comporte :
- une armature de support, en particulier tubulaire, disposée transversalement par rapport à l'axe longitudinal de la remorque,
- au moins un moteur électrique étanche, en particulier un groupe motoréducteur, fixé sur l'armature,
- deux ensembles de roues disposés au train roulant porteur, chaque ensemble de roues comportant au moins deux roues différentes,
- l'arête longitudinale étant fixée à l'armature du train roulant porteur par son extrémité opposée à celle prolongée par le timon; le timon comportant des moyens de commande pour commander le fonctionnement du moteur électrique étanche.

Les deux roues différentes pourrait être différentes en taille (diamètre).

Chaque ensemble de roues comporte une ou plusieurs roue(s) équipé(s) de pneu à sculpture peu profonde et une ou plusieurs roue(s) équipée(s) de pneu à sculpture profonde.

Selon un deuxième aspect de l'invention selon la revendication no. 2 l'armature de support comporte au moins une partie de renfort qui s'étend au-dessus du moteur ou/et une partie de renfort qui s'étend au-dessus des roues.

Selon un troisième aspect de l'invention selon la revendication no. 3 le timon comporte un boîtier étanche avec une fermeture qui offre accès à au moins une batterie pour alimenter le moteur.

L'armature peut être une armature tubulaire disposée transversalement par rapport à l'axe longitudinal de la remorque.

Le moteur électrique peut être constitué par un groupe motoréducteur étanche fixé sur l'armature, comportant deux arbres de transmission en prise permanente sur le groupe motoréducteur, disposés latéralement, chaque arbre de transmission présentant une extrémité reliée au bloc motoréducteur et une extrémité au voisinage de laquelle il est fixé sur l'armature de façon à pouvoir tourner sur lui-même librement.

Les deux ensembles de roues peuvent être montés chacun sur l'extrémité d'un arbre de transmission de façon à pouvoir tourner librement autour dudit arbre .

Selon une réalisation de l'invention la remorque contient des moyens de couplage montés sur chacun des ensembles de roues et configurés pour permettre à l'opérateur de rendre chacun des ensembles de roues solidaire en rotation avec l'arbre de transmission à l'extrémité duquel il est monté ou inversement de rendre ledit ensemble de roues libre en rotation autour dudit arbre.

L'arête longitudinale pourrait être fixée à l'armature tubulaire du train roulant porteur par son extrémité opposée à celle prolongée par le timon. Le timon comporte en outre des moyens de commande pour commander le fonctionnement du groupe motoréducteur, lesdits moyens étant actionnés par la poignée de manoeuvre.

Une remorque dans la signification de l'invention est un chariot motorisé, capable à porter de embarcation légers, que pourrait, mais ne pas nécessairement,- dans certaines situations - être acouplé à un vehicule et être tiré par ce vehicule. Une embarcation légère dans le sens de cette demande est chaque objet nautique qui peut être transporté sur une remorque, sans limite de poids, en particulier pour des bateaux de sport, des jet-ski, de petits bateaux de pêche, etc.

La remorque selon l'invention est configurée pour supporter au moins une coque de l'embarcation. Elle comporte des moyens pour recevoir, tenir et stabiliser la coque, par exemple une courroie ou une lame élastique ou souple sur laquelle l'embarcation est destinée à reposer et un support en V, à angle d'ouverture réglable, disposé sur l'arête longitudinale.

Une arête longitudinale ou généralement longitudinale est constituée selon l'invention par un élément disposé transversalement ou généralement transversalement par rapport à l'axe du train roulant porteur, y compris des angles entre l'arête longitudinale et l'axe entre 60° et 90 °.

Selon différentes dispositions pouvant être combinées les unes aux autres la remorque selon l'invention présente également diverses caractéristiques complémentaires. Ainsi :
Selon une disposition particulière, la remorque selon l'invention comporte en outre un différentiel couplé au groupe motoréducteur en amont des arbres de transmission ou directement intégré au groupe motoréducteur.

Selon une autre disposition particulière, la remorque est caractérisée en ce qu'un moyen de couplage comporte deux embouts fixés respectivement sur les flancs interne et externe de l'ensemble de roues auquel il est associé, chaque embout étant lui-même associé à une goupille; un embout comportant : une partie formant une embase circulaire d'épaisseur et de diamètre donnés, présentant une ouverture circulaire centrale, surmontée par une partie tubulaire en forme de cylindre de révolution, d'épaisseur donnée, et présentant un diamètre extérieur sensiblement plus faible que le diamètre de la l'embase; ainsi qu'un diamètre intérieur sensiblement égal au diamètre de l'ouverture circulaire ménagée dans l'épaisseur de la rondelle; le diamètre de l'ouverture circulaire centrale de l'embase et le diamètre intérieur de l'élément tubulaire étant sensiblement égaux, à un jeu fonctionnel près, au diamètre d'un arbre de transmission, l'embase et la partie tubulaire étant solidaires l'une de l'autre.

Selon une autre disposition particulière, chaque arbre de transmission est traversé transversalement à son extrémité par deux orifices de passage permettant l'insertion d'une goupille alors que la partie tubulaire de chacun des embouts est également percée d'un orifice de passage, orienté transversalement et permettant le passage d'une goupille, les orifices de passage de l'arbre de transmission et de chacun des embouts sont par ailleurs agencés de telle façon que, lorsqu'un ensemble de roues équipé de ses deux embouts est emmanchée sur l'extrémité de l'arbre, l'orifice traversant la partie tubulaire de chacun des embouts puisse être placé en regard d'un des orifices traversant l'extrémité de l'arbre de façon à constituer un orifice unique dans lequel une goupille peut être insérée.

Les goupilles de moyen de couplage sont des goupilles faites d'un axe percé à son extrémité pour y mettre un système de blocage ou des goupilles avec à leur extrémité une languette mobile qui se place transversalement pour bloquer la goupille ou longitudinalement pour que la même goupille puisse être retirée.

Selon une autre disposition particulière, les goupilles des moyens de couplage sont des goupilles fendues ou des goupilles bêta.

Selon une autre disposition particulière, chaque embout est fixé sur le flanc externe ou interne de l'ensemble de roues par l'intermédiaire de boulons traversant le corps de l'embout et la paroi de la jante.

Selon une autre disposition particulière, chacun des ensembles de roues est constitué de trois roues ou constitué de plusieurs roues assemblées séparées les unes des autres par des entretoises, lesdites roues étant solidarisées les unes avec les autres par l'intermédiaire de boulons traversant l'embase de chacun des embouts et les parois des jantes desdites roues. Chaque ensemble de roues comporte un ou plusieurs roue(s) équipé(s) de pneu à sculpture peu profonde et un ou plusieurs roue(s) équipée(s) de pneu à sculpture profonde.

Selon une autre disposition particulière, le train roulant porteur comporte un élément support, ou ber, destiné à recevoir la coque de l'embarcation.

Selon une autre disposition particulière, l'élément support comporte une courroie ou une lame de matériau élastique ou souple, placée au dessus de l'armature et fixée à cette dernière par deux structures disposées aux extrémités de l'armature.

Selon une autre disposition particulière, l'élément support est un bâti constitué par l'armature elle-même.

Selon une autre disposition particulière, le timon comporte un prolongement, disposé dans le plan vertical passant par l'axe du timon et incliné par rapport à la verticale d'un angle a donné. Ledit prolongement comporte à son extrémité des poignées permettant de manoeuvrer la remorque. La longueur du prolongement et son angle d'inclinaison sont définis de façon à faciliter la mise en oeuvre de ladite remorque par un individu.

Selon une autre disposition particulière, le train roulant porteur comportant un groupe motoréducteur électrique, le timon intègre un compartiment logeant une batterie d'alimentation électrique amovible et un boitier de commande comportant un variateur relié au groupe motoréducteur par un câble électrique.

Selon une autre disposition particulière, la remorque selon l'invention comporte en outre des moyens annexes pour réaliser le rechargement de la batterie d'alimentation électrique, ces moyens comportant un dispositif photovoltaïque de production d'électricité, que pourrait être selon une autre disposition particulière de structure souple.

Avantageusement la remorque selon l'invention permet de résoudre le problème du transport et du stockage occasionné par l'utilisation d'une remorque annexe.

De manière avantageuse, également, la remorque selon l'invention permet de remédier facilement, de par sa structure, aux dommages qui lui sont causés, soit par des chocs accidentels soit par la corrosion consécutive à son usage à proximité de zones aquatiques ou marines et à sa mise en contact par immersion partielle, voire totale, dans des milieux aquatiques ou marins.

### DESCRIPTION DES FIGURES

Les caractéristiques et avantages de l'invention seront mieux appréciés grâce à la description qui suit, description qui s'appuie sur les figures annexées qui présentent :
- la figure 1, une vue schématique générale, en perspective, d'un exemple de réalisation de la remorque selon l'invention ;
- la figure 2, une vue schématique partielle montrant les différents éléments constituant le train roulant (l'essieu tracteur) de la remorque selon l'invention dans l'exemple de réalisation de la figure 1 ;
- la figure 3, une vue schématique partielle présentant un exemple d'ensemble de roues pouvant équiper le train roulant de la remorque selon l'invention, notamment dans les modes de réalisation des figure 1 et 2 ;
- les figures 4 à 6, des vues schématique présentant un exemple de réalisation des moyens de liaison amovibles permettant de solidariser les ensembles de roues aux arbres de transmission du groupe motoréducteur, notamment dans les modes de réalisation des figure 1 à 3;
- la figure 7, une représentation schématique des moyens permettant de maintenir les ensembles de roues en place sur la structure porteuse du train roulant ;
- les figure 8a et 8b, des vues schématiques présentant un exemple de réalisation du prolongement verticale du timon avec la poignée de commande des mouvements de la remorque selon l'invention ainsi qu'un exemple de réalisation du dispositif d'alimentation électrique et de commande du moteur monté sur le train roulant.
- la figure 9 une vue schématique générale, en perspective, d'un autre exemple de réalisation de la remorque selon l'invention adapté au déplacement d'embarcations de type catamaran,
La figure 10 une vue schématique partielle présentant un autre exemple d'ensemble de roues pouvant équiper le train roulant de la remorque selon l'invention, de la même façon que la figure 3,
Les figures 11 à 13 des vues schématique présentant un autre exemple de réalisation des moyens de liaison amovibles permettant de solidariser les ensembles de roues aux arbres de transmission du groupe motoréducteur, de la même façon que les figures 4 á 6,

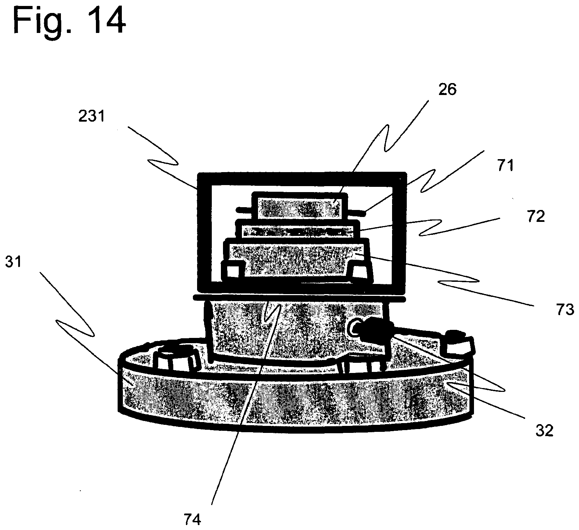

La figure 14 une représentation schématique des autres moyens permettant de maintenir les ensembles de roues en place sur la structure porteuse du train roulant de la même façon que la figure 7;
La figure 15 une vue schématique comme figure 8b présentant un autre exemple de réalisation du prolongement verticale du timon avec deux batteries,
La figure 16 une vue schématique générale, en perspective, d'un autre exemple de réalisation de la remorque selon l'invention adapté au déplacement d'embarcations de type catamaran, de la même façon que la figure 9,
La figure 17 une vue schématique générale, d'en haut, d'un autre exemple de réalisation de la remorque selon l'invention avec deux arêtes longitudinales étant fixée à l'armature formant un triangle avec le train porteur,
La figure 18 une vue schématique générale, d'en haut, d'un autre exemple de réalisation de la remorque selon l'invention avec une arête longitudinale étant fixée à l'armature, le train porteur comportant deux moteurs électriques chacun associé à un roue ou à un ensemble de roues,
La figure 19 une vue schématique générale, en perspective, d'un autre exemple de réalisation de la remorque selon l'invention comportant une tête d'attelage adapté à être relié avec un véhicule, destiné à une traction par le véhicule à une vitesse inférieure à 30 km/h.

### DESCRIPTION DETAILLEE

Pour des raisons de clarté de la présentation de l'invention, les caractéristiques techniques de cette dernière sont présentées dans la suite de la description au travers de plusieurs exemples de réalisation illustrés notamment par les figures associées 1 à 19. La description de l'invention au travers de ces exemples de réalisation n'a cependant pas pour objet de limiter la portée et l'étendue de l'invention revendiquée à ce seul mode de réalisation.

Certains exemples de la réalisation de l'invention sont décrits dans les figures et seulement de façon exemplaire. Pour une facilité de comparaison et pour de raisons de lisibilité, pour les différents exemples de réalisation de l'invention, tous les éléments identiques ou similaires ont été désignés par les mêmes numéros, avec parfois une petite lettre en supplément.

Tous les critères montrés ou décrits seulement pour un exemple de réalisation de l'invention pourraient être prévus aussi dans tous les autres exemples de réalisation de l'invention. De tels exemples de réalisation de l'invention sont aussi divulgués et sont compris dans l'invention.

Comme cela a été dit précédemment, la fonction de la remorque selon l'invention est de permettre le déplacement d'une embarcation jusqu'au rivage depuis son lieu de dépose ou de stockage, à travers une zone de terrain non carrossable de façon à ce que le déplacement et la mise à l'eau de l'embarcation puisse être réalisé sans effort par une personne seule.

Par "lieu de dépose" on entend par exemple l'emplacement de stationnement sur lequel est garé le véhicule ayant servi à transporter l'embarcation jusqu'au site de mise à l'eau; tandis que par "lieu de stockage" on entend par exemple l'endroit à proximité du rivage où l'embarcation est généralement placée lorsqu'elle n'est pas utilisée. Un tel endroit est par exemple constitué par un lieu abrité proche du rivage et séparé de celui-ci par une zone de terrain non carrossable, prairie ou plage, qu'il faut faire traverser à l'embarcation pour la mettre à l'eau.

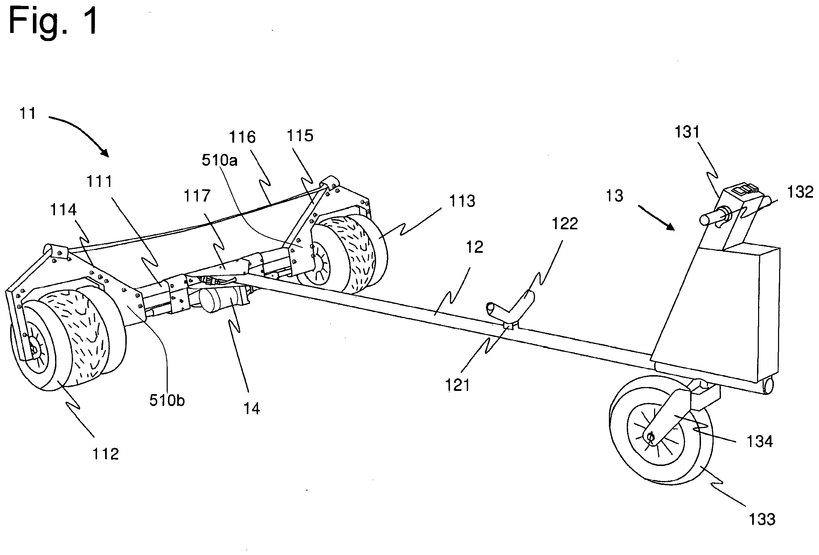

Pour réaliser cette fonction, la remorque selon l'invention comporte principalement, comme l'illustre la figure 1, un train roulant 11 formé d'une armature tubulaire 111, relié à une tige ou un tube formant une arête longitudinale 12, dont une des extrémités est fixée au train roulant 11, l'autre extrémité étant quant à elle prolongée par un élément 13 formant un timon.

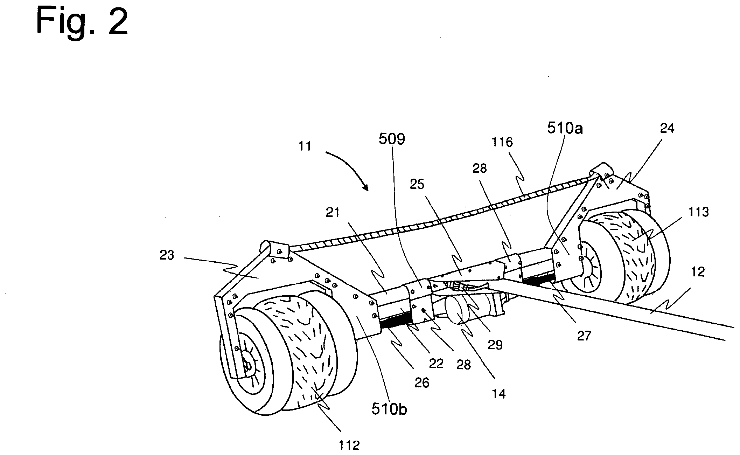

Afin de permettre un démontage facile pour le transport, l'arête longitudinale 12 est reliée au train roulant 11 par des moyens de fixation amovibles. Par ailleurs, un connecteur étanche 29 à démontage rapide, visible sur la figure 2, permet de déconnecter le train roulant du câble électrique d'alimentation logé dans l'arête longitudinale 12.

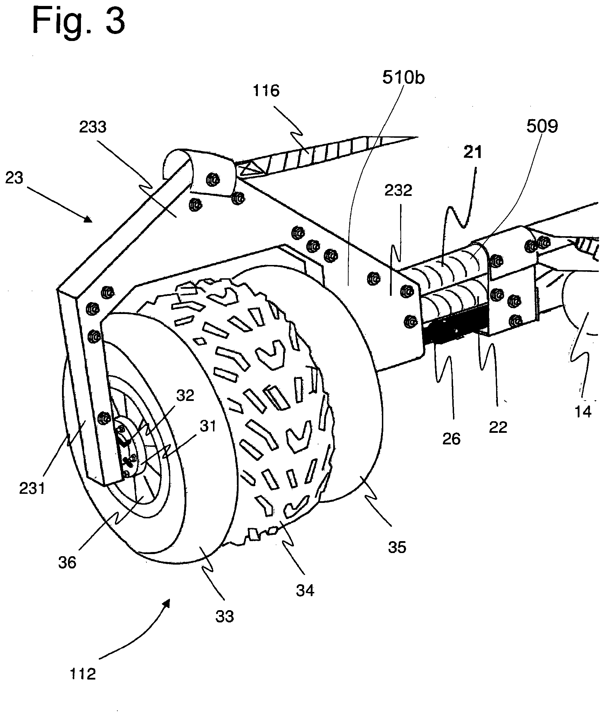

Selon l'invention, le train roulant comporte deux ensembles de roues 112 et 113 disposés de part et d'autre, constitués chacun par un jeu de plusieurs roues assemblées les unes aux autres au niveau de leurs jantes, au moyen de boulons par exemple. Chaque ensemble de roues comporte ainsi, comme l'illustre la figure 3, au moins une roue intérieure 35 et une roue extérieure 33, le flanc intérieur de la jante de la roue intérieure 35, autrement dit la roue la plus interne de l'ensemble considéré, constituant le flanc interne de l'ensemble de roues 112 ou 113, tandis que le flanc extérieur de la jante de la roue extérieure 33, autrement dit la roue la plus externe de l'ensemble considéré, constituant le flanc externe de l'ensemble de roues 112 ou 113.

L'élément 13 formant un timon comporte un prolongement 131 destiné à la manipulation de la remorque par l'utilisateur et comportant des poignées 132 destinées à cet usage.

Ce prolongement 131 est préférentiellement constitué d'un élément tubulaire, de section rectangulaire préférentiellement, disposé dans le plan vertical passant par l'axe du timon 13 et est incliné par rapport à la verticale d'un angle a donné. Il comporte à son extrémité des poignées 132 permettant de manoeuvrer la remorque, la longueur du prolongement et son angle d'inclinaison étant définis de façon à faciliter la mise en œuvre de ladite remorque par un individu seul.

Le timon 13 intègre en outre un élément d'appui permettant de maintenir la remorque à l'horizontale, cet élément d'appui étant préférentiellement constitué d'une roue 133, libre en rotation, montée sur le timon 13 par l'intermédiaire d'une chape 134 configurée de façon à permettre à la roue de pivoter autour d'un axe vertical, à la façon des roues "jockey" équipant généralement les remorques de transport.

La structure tubulaire 111 du train roulant 11 supporte un ber destiné à porter l'embarcation, ce ber étant préférentiellement constitué par deux éléments supports 114 et 115 en tôles pliées, supportant dans leur partie supérieure une courroie ou une lame élastique 116 ou souple sur laquelle l'embarcation est destinée à reposer. Ce ber est associé à un support en V, 121, à angle d'ouverture réglable, disposé sur l'arête longitudinale 12 de telle façon que l'étrave de l'embarcation y repose, le support 121 étant préférentiellement habillé d'un patin amortisseur 122, un patin de caoutchouc par exemple.

Comme l'illustre la figure 2, les éléments support 114 et 115 sont préférentiellement constitués par deux chapes 23 et 24 comportent chacune un montant interne 232 ou 242, un montant externe 231 ou 241 et un montant supérieur 233, 243. Les montants sont agencés de façon à ce que chacune des chapes constitue une structure présentant une forme de U renversé dans l'ouverture de laquelle vient se loger un des ensembles de roues 112 ou 113.

L'armature 111 de support comporte une partie 509, (figure 2), notamment une partie de renfort, qui s'étend au-dessus du moteur 14. L'armature 111 de support comporte aussi deux parties 510a, 510b, notamment deux parties de renfort, qui s'étendent au-dessus des roues 112, 113. Ces parties 509, 510a, 510b de renfort servent à protéger le moteur 14 et les ensembles 112, 113 des roues dans le cas où l'embarcation serait mal positionnée ou serait balancée, aussi dans le cas où les moyens pour tenir l'embarcation en place ne fonctionneraient pas correctement.

D'un point de vue dimensionnel, l'empattement du train roulant 11 ainsi que la longueur de l'arête longitudinale 12 sont définis en fonction de la longueur et de la largeur de l'embarcation à laquelle elle est destinée.

De manière générale la structure mécanique de la remorque selon l'invention est une structure légère démontable, constituée préférentiellement de tubes en matériaux légers et peu sensibles à la corrosion, des tubes en aluminium ou en matériau composite par exemple, assemblés les uns aux autres à l'aide de boulons par l'intermédiaire de plaques d'assemblage.

De manière avantageuse la structure démontable ainsi adoptée permet de remédier facilement aux dommages qui peuvent être causés aux différents éléments constituant la remorque, soit par des chocs accidentels soit par la corrosion consécutive à son usage à proximité de zones aquatiques ou marines et à sa mise en contact par immersion partielle, voire totale, dans des milieux aquatiques ou marins.

Alternativement la structure peut cependant être formée d'éléments tubulaires assemblés de manière fixe par souage ou collage notamment.

Selon le mode de réalisation envisagé, l'ossature tubulaire peut comporter un tube unique ou alternativement deux tubes superposés 21 et 22, comme dans le mode de réalisation pris comme exemple et illustré par la figure 2.

Elle comporte également des moyens d'assemblage destinés à solidariser les différents éléments entre eux. Dans l'exemple de réalisation de la figure 2, ces moyens d'assemblage sont constitués par deux chapes latérales 23 et 24.

Selon le mode de réalisation choisi, la fixation 117 reliant le train roulant 11 à l'arête longitudinale 12 peut quant à elle consister en une simple plaque, fixée sur l'ossature tubulaire au moyen de boulons par exemple, et sur laquelle l'extrémité de l'arête longitudinale 12 est fixée.

Alternativement elle peut consister, comme dans l'exemple de réalisation de la figure 2, en une chape 25 horizontale constitué par une tôle repliée placée au niveau de la partie médiane du train roulant 11 et enveloppant le tube supérieur 21 ; chape à laquelle l'extrémité de l'arête longitudinale 12 est fixée par deux boulons.

La chape 25 comporte deux flancs superposés de forme triangulaire, ces flancs étant percés de trous permettant la mise en place de quatre axes verticaux, deux traversant simultanément les flancs et le tube supérieur 21, et deux autres traversant simultanément les flancs et l'arête longitudinale 12.

Selon l'invention la structure tubulaire constituant l'ossature mécanique du train roulant 11 est configurée pour intégrer un bloc motoréducteur 14 constituant l'organe principal de motorisation de la remorque. Ce bloc motoréducteur a pour fonction d'entrainer en rotation les ensembles de roues 112, 113 situés de part et d'autre de la structure par l'intermédiaire de deux arbres de transmission 26 et 27, entraînés de manière permanente par le bloc motoréducteur, sur lesquels les ensembles de roues 112, 113 qui constituent l'essieu moteur de la remorque sont directement montés. Préférentiellement les arbres de transmission présentent une section circulaire.

Selon le mode de réalisation de la remorque selon l'invention, le bloc motoréducteur est monté sur la structure 111 de la manière la plus simple et la plus appropriée.

Dans l'exemple de réalisation de la figure 2, le bloc motoréducteur 14 est un bloc électrique logé dans un berceau 28, suspendu à la structure et fixé à cette dernière par des boulons. La structure du berceau 28 laisse le passage aux deux arbres de transmission 26 et 27 solidaires du bloc motoréducteur 14.

Par ailleurs les extrémités libres des arbres 26 et 27 sont suspendues à la structure 111 par des moyens permettant leur libre rotation, des paliers logés en partie basse des montant latéraux 231 et 232 ou 241 et 242 des chapes 23 et 24 qui solidarisent les éléments de la structure par exemple, comme illustré par la figure 2.

La figure 3 offre une vue détaillée du train roulant 11 constituant la remorque selon l'invention, vue qui présente le bloc motoréducteur, un ensemble 112 de roues motrices 33, 34 et 35 et la liaison mécanique et cinématique qui relie les deux éléments.

Comme cela a été dit précédemment, chacun des ensembles de roues 112 ou 113 du train roulant constituant l'essieu moteur de la remorque selon l'invention est constitué de plusieurs roues assemblées (roues jumelées, roues triples, etc..) mécaniquement solidaires les unes des autres. Dans une forme de réalisation préférée les roues sont fixées les unes aux autres par leurs jantes de façon à ne plus former qu'une roue unique. La fixation peut par exemple être réalisée au moyen de boulons traversant lesdites jantes de part en part.

L'utilisation de roues de plusieurs roues assemblées les unes aux autres permet avantageusement de réaliser des ensembles ayant une large bande de roulement, moins susceptibles de s'enfoncer dans un sol meuble, ou dans le sable, à partir de roues mise à l'eau standard, présentant des bandes de roulement plus faibles, mais qui sont disponibles sur le marché à faible coût.

Dans une forme de réalisation préférée, les ensembles de roues équipant la remorque peuvent être constitués d'au moins deux roues jumelées 33 et 35, séparées l'une de l'autre par une entretoise de façon à ce que leurs pneus soient en contact afin d'éviter au sable de rentrer entre les deux pneus et ne soient cependant pas écrasés l'un contre l'autre.

Ces ensembles de roues sont cependant idéalement constitués, comme l'illustre la figure 3, de trois roues jumelées : deux roues 33 et 35 équipées de pneus à sculptures peu profondes, voire sans sculpture, séparées par une roue intercalaire 34 équipée d'un pneu à sculpture plus profonde, un pneu cranté par exemple.

Dans cette dernière configuration on obtient avantageusement des ensembles de roues présentant une accroche au sol suffisante pour vaincre facilement l'inertie de la remorque lors de sa mise en marche et une surface de roulement suffisante pour ne pas s'enfoncer dans le sol en cas de déplacement sur un sol très meuble ou sur du sable. Avantageusement, l'association de roues à sculptures peu profondes avec des roues à sculptures profondes ; voire très profondes, évite, en cas de patinage, l'enfoncement du train roulant et permet de dégager la remorque très facilement en passant en marche arrière.

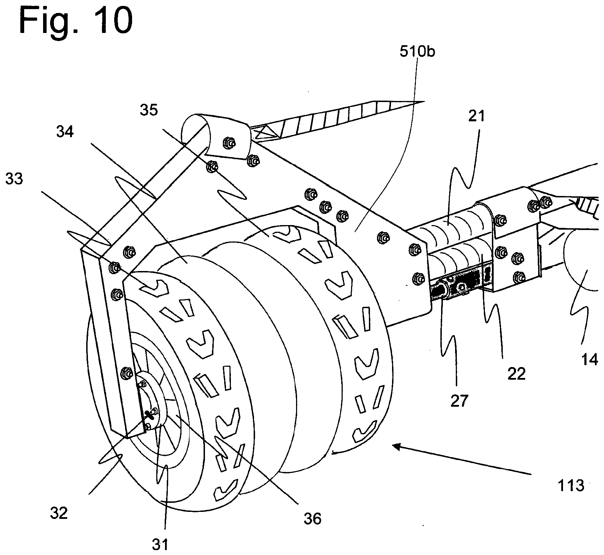

Un autre ensemble 113 de roues, comme l'illustre la figure 10, comporte de quatre roues jumelées : deux roues 33 et 35 équipées de pneus à sculptures profondes, séparées par deux roues intercalaires 34 équipée d'un pneu à peu sculpture, voire sans sculpture, par exemple.

Selon l'invention, les ensembles de roues 112 et 113 sont montés en prise directe sur les arbres de transmission et sont montés solidaires en rotation de ces derniers.

Dans l'exemple de mise en œuvre détaillé ici, les ensembles de roues 112 et 113 sont respectivement enfilés par leurs moyeux sur les extrémités des arbres de transmission 26 et 27 et chaque ensemble étant couplé à l'arbre correspondant par un dispositif de couplage 31-32 qui le rend solidaire en rotation de ce dernier. On obtient ainsi, par l'utilisation d'un bloc motoréducteur 14 un dispositif de transmission direct avantageusement simple.

Selon le mode de réalisation considéré, le couplage mécanique entre un arbre de transmission 26 ou 27 et l'ensemble de roues 112 ou 113 correspondant, couplage destiné à rendre l'ensemble de roues considéré solidaire en rotation de l'arbre de transmission correspondant, peut prendre différentes formes connues et être réalisé à l'aide de divers moyens de couplage.

Selon l'invention cependant les moyens de couplage mis en œuvre sont configurés pour permettre alternativement d'assurer l'entrainement de l'ensemble de roues considéré par l'arbre de transmission sur lequel il est monté (mise en prise) ou de laisser ledit ensemble de roues libre de tout entraînement par ledit arbre (mise en roue libre).

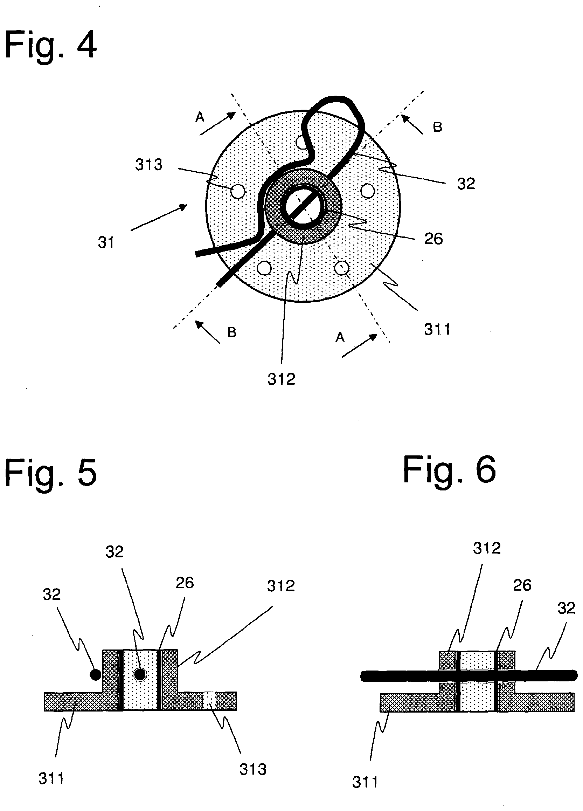

Les figures 4 à 6 présentent un exemple de dispositif permettant de réaliser ce couplage de manière avantageusement simple. Ce dispositif, présenté dans le cas d'un ensemble de roues comportant trois roues, ou roues triples, peut de manière immédiate être utilisé, sans nécessiter d'adaptation spécifique, dans le cas d'un ensemble à deux roues, ou roues jumelées.

Dans le mode de réalisation illustré par les figures 4 à 6, le dispositif de couplage est constitué de deux cales 31 de blocage et chaque cale étant associée à une goupille 32.

Selon l'invention, une cale de blocage 31 comporte deux parties solidaires l'une de l'autre : une embase circulaire 311 d'épaisseur et de diamètre donnés, présentant une ouverture circulaire centrale, surmontée par un élément tubulaire 312 en forme de cylindre de révolution, d'épaisseur donnée, et présentant un diamètre extérieur sensiblement plus faible que le diamètre de l'embase 311 ; ainsi qu'un diamètre intérieur sensiblement égal au diamètre de l'ouverture circulaire ménagée dans l'épaisseur de la rondelle 311.

Le diamètre de l'ouverture circulaire centrale de l'embase 311 et le diamètre intérieur de l'élément tubulaire 312 sont sensiblement égaux, à un jeu fonctionnel près, au diamètre d'un arbre de transmission, de sorte qu'une cale 31 peut être enfilée sur l'arbre.

Les deux parties 311 et 312 constituant une cale 31 sont juxtaposées et agencées l'une par rapport à l'autre de façon à ce que le canal formé par l'élément tubulaire 312 et l'ouverture ménagée dans l'embase circulaire 311 présentent des axes de révolution colinéaires (alignés). Elles sont solidaires l'une de l'autre.

Préférentiellement, les deux parties de la cale 31 sont réalisées dans un même élément en matériau de faible densité, dans un morceau de matière plastique ou dans un morceau d'un métal tel que de l'aluminium par exemple.

Selon ce mode de réalisation l'embase 311 est percée de trous 313 disposés à sa périphérie, de manière régulière de préférence.

La partie cylindrique 312 est quant à elle percée de part en part par deux ouvertures transversales diamétralement opposées au travers desquelles la tige de la goupille 32 peut être insérée.

Les trous 313 pratiqués dans l'épaisseur de l'embase 311 ont pour objet de permettre la fixation de l'embase sur le flanc de l'ensemble de roues 112 ou 113 contre lequel la cale 31 considérée est placée, flanc externe ou flanc interne, la fixation pouvant par exemple être réalisée au moyen de vis ou de boulons.

Dans une forme de réalisation préférée de l'invention, les trous pratiqués dans l'embase 311 sont agencés de telle façon qu'ils correspondent aux trous pratiqués sur les jantes des roues formant l'ensemble de roues 112 ou 113 considéré, de sorte que lesdits ensembles et les cales qui leur sont associées puissent être solidarisés par un jeu unique de boulons.

Selon ce mode de réalisation, chacun des arbres de transmission 26 ou 27 comporte à proximité de son extrémité deux perforations transversales permettant l'insertion de la tige d'une goupille 32. Dans le cas où l'arbre est un arbre tubulaire creux, cette perforation consiste en deux trous diamétralement opposés.

Ces perforations transversales sont par ailleurs positionnées le long de l'arbre de transmission considéré de telle façon que, lorsque l'ensemble de roues 112 ou 113 est enfilé sur l'arbre de transmission 26 ou 27 correspondant et que les cale 31 sont mises en place, les perforations pratiquées dans l'arbre coïncident avec les ouvertures transversales pratiquées dans l'élément tubulaire 312 de chacune des cales 31 de sorte qu'une goupille 32 puisse être insérée dans l'ouverture ainsi définie, comme illustré par les figures 4 à 6.

L'insertion ou le retrait de la goupille permettent ainsi, de manière avantageusement simple, de rendre l'ensemble de roues 112 ou 113 considéré solidaire en rotation de l'arbre de transmission correspondant ou inversement de laisser l'ensemble de roues libre de tout entraînement par ledit arbre.

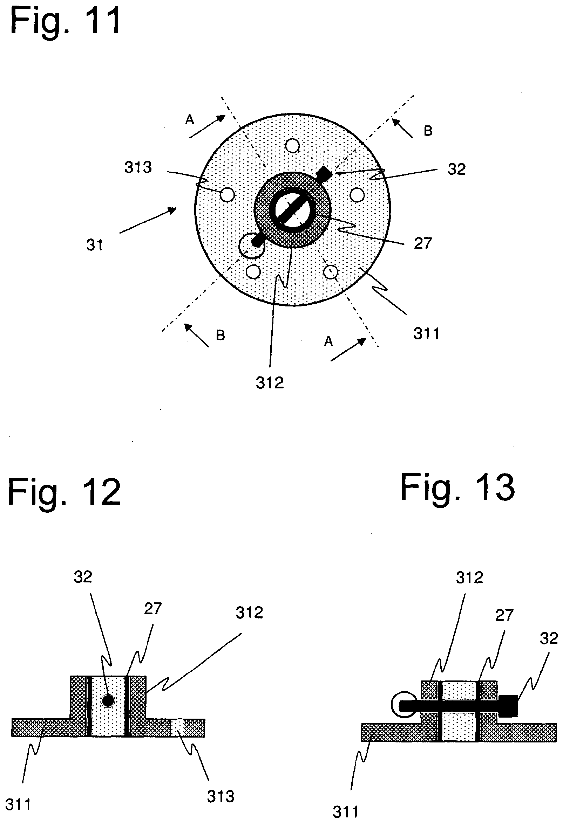

Les figures 11 à 13 présentent un autre exemple de dispositif permettant de réaliser ce couplage de manière avantageusement simple, qui est très similaire au dispositif des figures 4 à 6. Ici la goupille 32 est remplacée par un axe 32.

Ledit axe 32 comporte en son extrémité un système qui le maintient en place, un anneau brisé par exemple, comme montre la figure 13.

Il est à noter que le mécanisme de couplage de l'ensemble de roues considéré 112 ou 113 à l'arbre de transmission correspondant 26 ou 27 n'a évidemment pas pour fonction d'assurer le maintien latéral de la roue le long de l'arbre ni le maintien en place de l'arbre lui-même.

Par suite le maintien en place des ensembles de roues 112 et 113 et des arbres de transmission 26 et 27 est réalisé par les extrémités basses des montants latéraux externes 231 et 241 et internes 323 et 242 des deux chapes 23 et 24.

Les extrémités-basses des montants sont par ailleurs configurées, pour loger chacune un roulement traversé par l'arbre de transmission 26 ou 27 correspondant, roulement notamment destiné à faciliter la rotation de ce dernier.

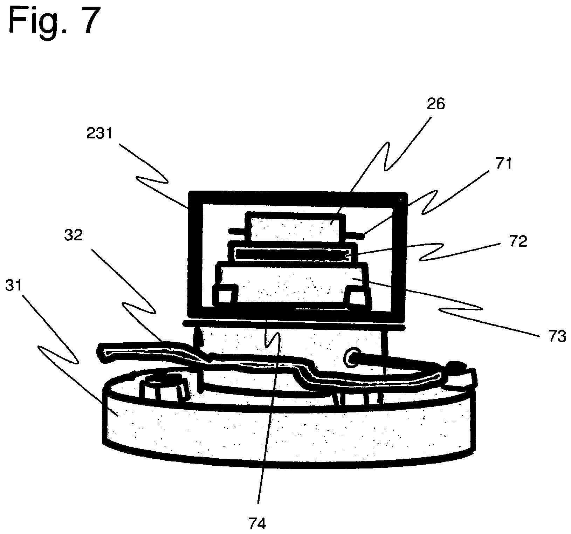

Dans un mode de réalisation préféré, illustré par la figure 7, l'extrémité de l'arbre de transmission 26 ou 27 est équipée d'un roulement 73 configuré de façon à ce que la paroi interne 74 du montant latéral externe de la chape 23 ou 24 correspondante repose sur la paroi externe dudit roulement. Par ailleurs, l'arbre de transmission 26 ou 27 considéré présente une perforation transversale, destinée à accueillir une goupille élastique 71 empêchant les extrémités de l'arbre de transmission de glisser le long de la paroi interne du roulement 73. Le roulement 73 est par ailleurs protégé par une rondelle 72 positionnée entre celui-ci et à la goupille élastique 71.

Comme cela a été dit précédemment, le groupe motoréducteur destiné à équiper le dispositif selon l'invention est un ensemble compact comportant un moteur électrique associé à un organe de démultiplication.

L'ensemble est monté dans un boîtier, un carter, étanche, de sorte que le bloc motoréducteur peut avantageusement être exposé sans dommage aux intempéries et peut même être momentanément immergé. C'est notamment le cas lorsque, pour des raisons de commodité, la mise à l'eau de l'embarcation se fait en empruntant une cale d'accostage, la remorque étant alors au moins partiellement plongée dans l'eau.

Le boitier du bloc motoréducteur présente en outre deux traversées étanches orientées dans deux directions opposées, par lesquelles sortent les arbres de transmission aux extrémités desquels sont montés les ensembles de roues de la remorque.

Dans une forme de réalisation préférée, le bloc motoréducteur intègre un différentiel placé en amont des arbres de transmission (26, 27) ou intégré au bloc motoréducteur (14).

Selon l'invention le bloc motoréducteur est alimenté en énergie électrique par l'intermédiaire d'une batterie capable de délivrer une puissance suffisante pour permettre au moteur de fonctionner à sa puissance maximale, et dont la capacité permet d'assurer à la remorque une autonomie suffisante.

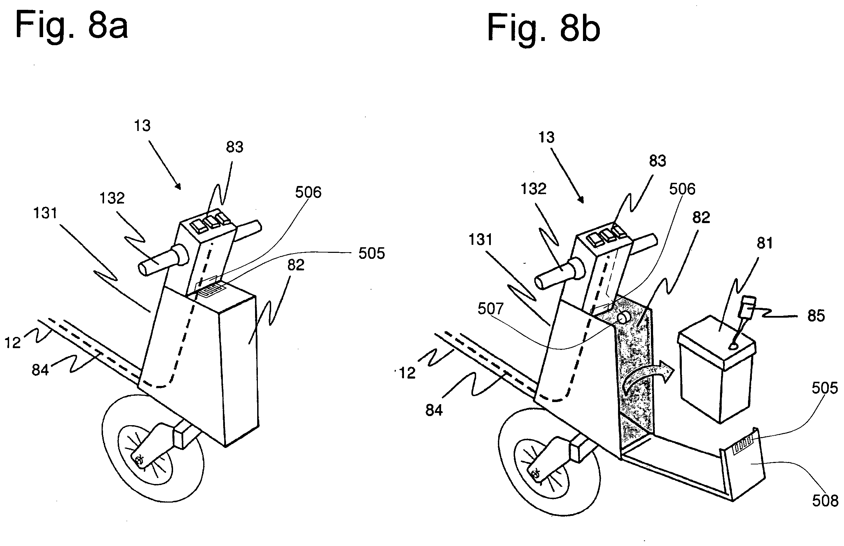

Dans le mode de réalisation pris comme exemple, la batterie 81 est logée dans un compartiment 82, placé sur le timon 13 et solidaire du prolongement 131, comme illustré par les vues 8-a et 8-b de la figure 8.

Le compartiment 82 est constitué par un boîtier qui contient une fermeture 508. Une serrure, en particulier une serrure à combinaison, sert à verrouiller le boîtier. La serrure contient un élément 506 fixé à la fermeture et un élément 505 fixé au boîtier, les deux éléments 505, 506 peuvent être verrouillés, les uns avec les autres.

Dans le compartiment 82 un interrupteur principal 507 (Fig. 8b) est disposé de sorte qu'il soit accessible seulement si la fermeture est ouverte pour éviter un utilisation de la remorque par des personnes non autorisés.

La batterie 81 est une batterie amovible configurée pour pouvoir être extraite du compartiment 82, pour des besoins de maintenance ou de simple recharge notamment. A cet effet Le compartiment 82 comporte un élément de connectique étanche 85, auquel la batterie 81 est raccordée lorsqu'elle est placée dans le compartiment.

Cet élément de connectique est relié à un boitier de commande 83 monté sur le prolongement 131 du timon 13, actionné par l'opérateur par l'intermédiaire des poignées 132, le boîtier comportant lui-même un variateur qui transfert l'énergie électrique de la batterie 81 au groupe motoréducteur 14 via au câble d'alimentation figuré par la flèche en trait pointillé 84. Ce câble chemine à l'intérieur de l'arête longitudinale 12, cette dernière étant préférentiellement constituée par une structure tubulaire creuse, pour des raisons évidente de masse.

L'extrémité du câble d'alimentation est équipée d'une prise étanche 29, visible notamment sur la figure 2, sur laquelle vient se raccorder la prise d'alimentation du bloc motoréducteur 14.

Selon l'invention le moteur électrique du bloc motoréducteur délivre un couple et une puissance suffisants, compte tenu de la nature du terrain sur lequel la remorque doit évoluer, pour permettre de mettre la remorque en marche depuis une position d'arrêt et pour entraîner celle-ci dans des conditions de charge maximales. Dans l'exemple de mise en œuvre décrit ici, la remorque étant destinée à se déplacer en terrain meuble en portant une embarcation d'une longueur maximale d'environ 5 mètres et d'une masse maximale d'environ 200 kg, le moteur utilisé développe une puissance d'environ 800 watts sous une tension d'alimentation de 24 volts ou d'un voltage différent et suffisant.

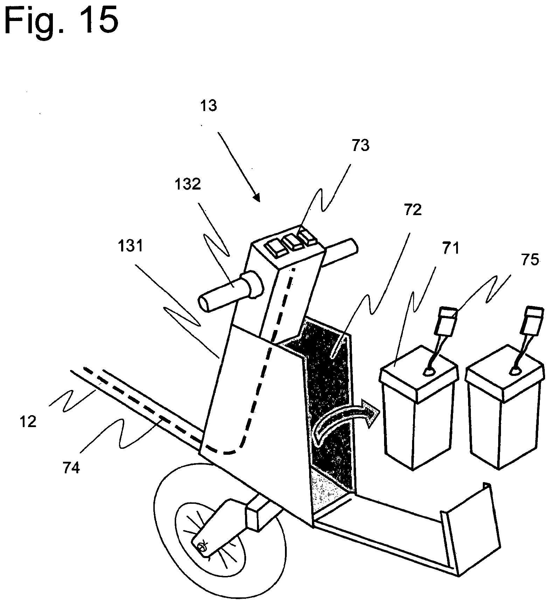

Pour alimenter le moteur en électricité, une ou plusieurs batteries peuvent être placées dans le compartiment à batterie. Dans le cas où il y a plusieurs batteries, l'utilisateur peut basculer d'une batterie à l'autre de sorte qu'il ait une réserve d'autonomie quand une batterie est vide. La figure 15 montre que le compartiment du boîtier est assez grand pour contenir deux batteries.

Les batteries utilisées sont des batteries de technologie LiFePo4 et peuvent présenter une capacité de 10 à 30 Ah.

Il est à noter que, la batterie ou les batteries étant amovible, cette dernière peut avantageusement être rechargée de différentes façons.

Elle pourra ainsi être déposée et transportée dans un local disposant d'une alimentation secteur et être chargée par l'intermédiaire d'un chargeur approprié.

Alternativement la batterie pourra être rechargée, in situ dans son logement, en lui appliquant la tension de charge appropriée, au moyen d'une source d'énergie électrique autonome telle qu'un panneau photovoltaïque amovible pouvant être fixé sur la remorque ou posé sur l'embarcation.

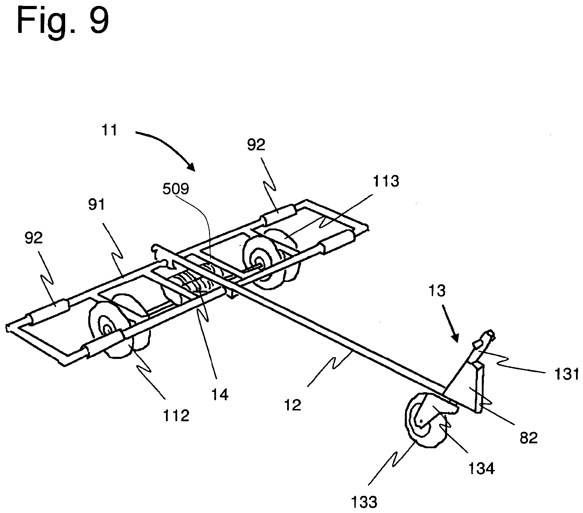

La figure 9 présente un mode de réalisation de la remorque selon l'invention adapté au déplacement d'une embarcation de type catamaran. Ce mode de réalisation voisin du mode décrit à titre d'exemple de mise en œuvre dans le texte qui précède reprend les éléments techniques essentiels de l'inventions tels que décrits pour le mode de réalisation précédent.

On retrouve ainsi un train roulant avec une ossature tubulaire et un groupe motoréducteur capable d'entrainer deux ensembles de roues disposés de part et d'autre de l'ossature, une arête longitudinale ainsi qu'un timon avec dispositif de type roue "jockey" le timon présentant un prolongement permettant d'actionner et de guider la remorque et pouvant comporter un logement pour batterie. Ces éléments techniques communs qui portent des repères de référence identiques ne sont donc pas décrits une nouvelle fois.

En revanche ce mode de réalisation diffère du précédent en ce que, quoique présentant essentiellement une structure tubulaire, l'ossature 91 du train roulant 11 présente une configuration différente de celle présentée par l'ossature 111 de l'exemple de réalisation précédent.

Comme l'illustre schématiquement la figure 9, cette ossature se présente ainsi sous la forme d'un cadre tubulaire en échelle, sensiblement rectangulaire, sur lequel sont fixées les ensembles de roues 112 et 113, par l'intermédiaire de chapes par exemple, et sous lequel est suspendu le bloc motoréducteur 14. L'arête longitudinale 12 est ici fixée de manière rigide sur le cadre tubulaire perpendiculairement à l'axe des ensembles de roues, de façon à occuper une position médiane, comme illustré par la figure 9. Le cadre tubulaire 91 comporte également des manchons amortisseurs 92 entourant les éléments tubulaires transversaux et disposés le long de ces éléments de telle façon qu'un catamaran placé sur la remorque puisse reposer sur le berceau en prenant appui par ses deux coques sur les manchons amortisseurs 92.

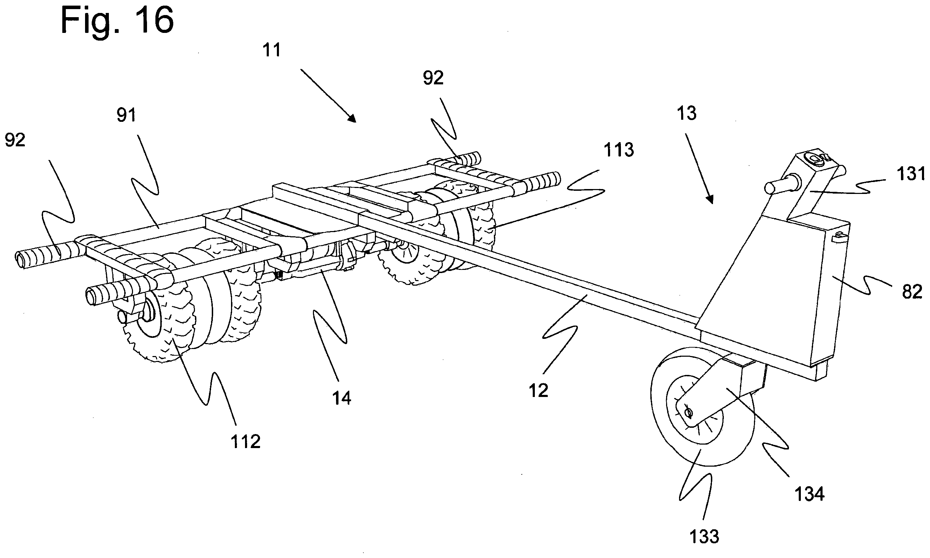

Comme l'illustre schématiquement la figure 16, un autre mode de réalisation de la remorque selon l'invention adapté au déplacement d'une embarcation de type catamaran comporte une armature de support qui s'étend au-dessus du moteur et qui s'étend au-dessus des roues.

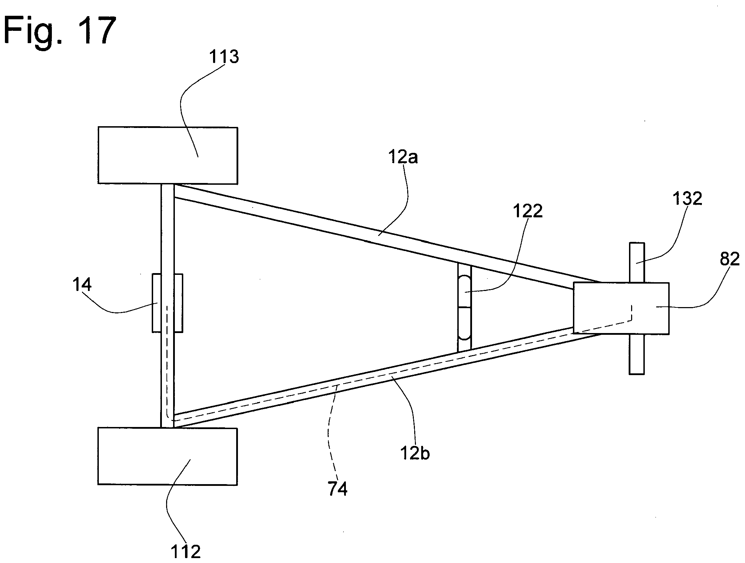

Comme l'illustre schématiquement la figure 17, un autre mode de réalisation de la remorque selon l'invention comporte deux arêtes longitudinales 12a et 12b étant disposés généralement transversalement par rapport à l'axe du train roulant porteur (11), fixée à l'armature et formant un triangle avec le train porteur.

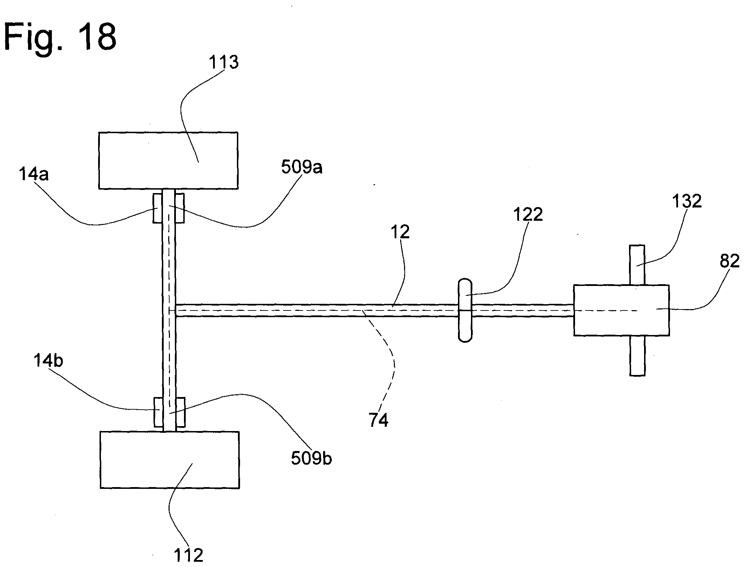

La figure 18 offre une vue schématique d'un autre mode de réalisation de la remorque selon l'invention qui comporte deux moteurs 14a, 14b électriques indépendants, chacun associé à un ensemble de roues 112, 113.

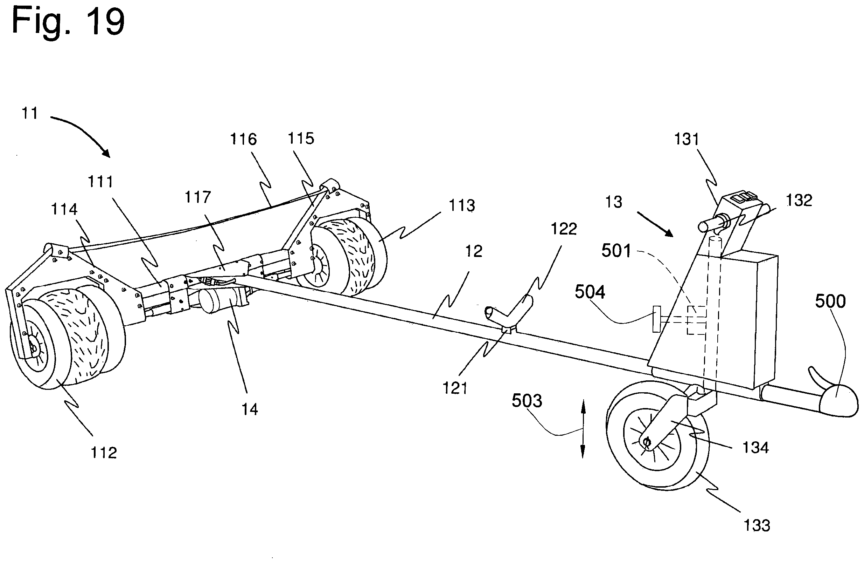

Finalement la figure 19 présente un autre exemple de la réalisation de la remorque selon l'invention qui comporte une tête d'attelage 500 adaptée pour être reliée avec un véhicule non illustré. Le dispositif 501 permet de déplacer la roue 133 en hauteur (en direction 503) et le bouton 504 permet de fixer la position verticale de la roue 133.

Ces différences techniques, qui résultent d'une démarche d'adaptation de la remorque selon l'invention au type d'embarcation déplacée, ne remettent cependant pas en cause la structure globale de l'invention.

## Revendications

1. Remorque pour le déplacement sur terre et la mise à l'eau d'une embarcation légère comportant un train roulant porteur (11) motorisé, configuré pour supporter au moins une coque de l'embarcation, prolongé par au moins une arête longitudinale (12) terminée par un timon (13) comportant une poignée de manœuvre (132), l'arête longitudinale (12) étant disposés transversalement ou généralement transversalement par rapport à l'axe du train roulant porteur (11), le train roulant porteur (11) comportant une armature (111) de support, en particulier tubulaire, disposée transversalement par rapport à l'axe longitudinal de la remorque, **caractérisée en ce que** le train roulant porteur (11) comporte en outre :
- au moins un moteur électrique (14) étanche, en particulier un groupe motoréducteur, fixé sur l'armature (111),
- deux ensembles de roues (112, 113), disposés au train roulant porteur, chaque ensemble de roues comportant au moins deux roues différentes,
- l'arête longitudinale (12) étant fixée à l'armature (111) du train roulant porteur (11) par son extrémité opposée à celle prolongée par le timon (13) ; le timon (13) comportant des moyens de commande (83) pour commander le fonctionnement du moteur électrique (14) étanche.

2. Remorque selon la revendication 1, **caractérisée en ce que** l'armature (111) de support comporte au moins une partie (509) de renfort qui s'étend au-dessus du moteur (14) ou/et une partie (510a, 510b) de renfort qui s'étend au-dessus des roues (112, 113).

3. Remorque selon la revendication 1 ou 2, **caractérisée en ce que**
le timon (13) comporte un boîtier étanche avec une fermeture (508) qui offre accès à au moins une batterie pour alimenter le moteur.

4. Remorque selon l'une des revendications 1 à 3, **caractérisée en ce qu'** un groupe motoréducteur, que contient le moteur électrique (14) étanche, fixé sur l'armature (111), comportant deux arbres de transmission (26, 27) en prise permanente sur le groupe motoréducteur (14), disposés latéralement, chaque arbre de transmission présentant une extrémité reliée au bloc motoréducteur (14) et une extrémité au voisinage de laquelle il est fixé sur l'armature (111) de façon à pouvoir tourner sur lui-même librement.

5. Remorque selon la revendication 4, **caractérisée en ce qu'**au moins deux roues, en particulier deux ensembles de roues (112, 113), sont monté chacun sur l'extrémité d'un arbre de transmission (26, 27) de façon à pouvoir tourner librement autour dudit arbre.

6. Remorque selon la revendication 5, **caractérisée en ce qu'**elle comporte des moyens de couplage (31, 32) montés sur chacun des ensembles de roues (112, 113) et configurés pour permettre à l'opérateur de rendre chacun des ensembles de roues (112, 113) solidaire en rotation avec l'arbre de transmission (26, 27) à l'extrémité duquel il est monté ou inversement de rendre ledit ensemble de roues (112, 113) libre en rotation autour dudit arbre.

7. Remorque selon l'une des revendications 1 à 6, **caractérisée en ce que** les moyens de commande (83) pour commander le fonctionnement du moteur électrique (14) étanche sont actionnés par au moins une poignée de manoeuvre (132).

8. Remorque selon l'une des revendications 4 à 6, **caractérisée en ce qu'**elle comporte en outre un différentiel couplé au groupe motoréducteur (14) en amont des arbres de transmission (26, 27) ou directement intégré au groupe motoréducteur.

9. Remorque selon la revendication 3, **caractérisée en ce que** le boîtier comporte une serrure (505, 506), en particulier une serrure à combinaison, pour verrouiller la fermeture.

10. Remorque selon l'une des revendications 3 ou 9, **caractérisée en ce qu'**un interrupteur principal (507) est placé dans un compartiment (82) du boîtier.

## Patentansprüche

1. Anhänger zum Fahren am Land und zum Wassern eines leichten Wasserfahrzeugs, umfassend einen motorbetriebenen fahrenden Tragrahmen (11), der eingerichtet ist, um mindestens einen Rumpf des Wasserfahrzeugs zu tragen, der durch mindestens eine Längskante (12) verlängert ist, die in einer Deichsel (13) endet, die einen Steuergriff (132)umfasst, wobei die Längskante (12) quer oder im wesentlichen quer zur Achse des fahrenden Tragrahmens (11) angeordnet ist, wobei der fahrende Tragrahmen (11) umfasst:
- eine Stützarmatur (11), die insbesondere rohrförmig ausgebildet ist, die quer zur Längsachse des Anhängers angeordnet ist, **dadurch gekennzeichnet, dass** der fahrende Tragrahmen (11) ferner umfasst:
- mindestens einen dicht ausgebildeten Elektromotor (14), insbesondere eine Getriebemotorgruppe, die auf der Armatur (111) befestigt ist,
- zwei Radeinheiten (112, 113), die am fahrenden Tragrahmen angeordnet sind, wobei jede Radeinheit mindestens zwei verschiedene Räder umfasst,
- wobei die Längskante (12) mit ihrem Ende, das dem durch die Deichsel (13) verlängerten gegenüberliegt, an der Armatur (11) des fahrenden Tragrahmens (11) befestigt ist; wobei die Deichsel (13) Steuermittel (83) umfasst, um den Betrieb des dicht ausgebildeten Elektromotors (14) zu steuern.

2. Anhänger nach Anspruch 1, **dadurch gekennzeichnet, dass** die Stützarmatur (111) mindestens einen Verstärkungsabschnitt (509)umfasst, der sich über den Motor (14) hinaus erstreckt, oder mindestens einen Verstärkungsabschnitt (510a, 510b), der sich über die Räder (112, 113) hinaus erstreckt.

3. Anhänger nach Anspruch 1 oder 2, **dadurch gekennzeichnet, dass** die Deichsel (13) ein dicht ausgebildetes Gehäuse mit einem Verschluss (508) umfasst, das Zugang zu mindestens einer Batterie zur Versorgung des Motors bietet.

4. Anhänger nach einem der Ansprüche 1 bis 3, **dadurch gekennzeichnet, dass** die Getriebemotorgruppe, die der dicht ausgebildete Elektromotor (14) umfasst, auf der Armatur (111) befestigt ist, umfassend zwei Übertragungswellen (26, 27), die permanent mit der Getriebemotorgruppe (14) in Eingriff sind, die seitlich angeordnet sind, wobei jede Übertragungswelle ein Ende, das mit dem Getriebemotorblock (14) verbunden ist, und ein Ende aufweist, in dessen Nähe sie auf der Armatur (111) befestigt ist, um sich frei um sich selbst drehen zu können.

5. Anhänger nach Anspruch 4, **dadurch gekennzeichnet, dass** mindestens zwei Räder, insbesondere zwei Radeinheiten (112, 113), jeweils an einem Ende einer Übertragungswelle (26, 27) montiert sind, um sich frei um die Welle drehen zu können.

6. Anhänger nach Anspruch 5, **dadurch gekennzeichnet, dass** er Kupplungsmittel (31, 32) umfasst, die auf jeder der Radeinheiten (112, 113) montiert und eingerichtet sind, um es dem Bediener zu ermöglichen, jede der Radeinheiten (112, 113) drehfest mit der Übertragungswelle (26, 27) zu verbinden, an deren Ende sie montiert ist, oder umgekehrt die Radeinheit (112, 113) um die Welle frei drehbar zu machen.

7. Anhänger nach einem der Ansprüche 1 bis 6, **dadurch gekennzeichnet, dass** die Steuermittel (83), um den Betrieb des dicht ausgebildeten Elektromotors (14) zu steuern, mit mindestens einem Betätigungsgriff (132) betätigt werden.

8. Anhänger nach einem der Ansprüche 4 bis 6, **dadurch gekennzeichnet, dass** er ferner ein Differential umfasst, das an die Getriebemotorgruppe (14) stromaufwärts zu den Übertragungswellen (26, 27) gekoppelt oder direkt in die Getriebemotorgruppe integriert ist.

9. Anhänger nach Anspruch 3, **dadurch gekennzeichnet, dass** das Gehäuse ein Schloss (505, 506), insbesondere ein Zahlenschloss, umfasst, um den Verschluss zu verriegeln.

10. Anhänger nach einem der Ansprüche 3 oder 9, **dadurch gekennzeichnet, dass** ein Hauptschalter (507) in einem Abteil (82) des Gehäuses angeordnet ist.

## Claims

1. A trailer for moving over ground and for launching a lightweight boat comprising a motorized supporting undercarriage (11) configured to support at least a hull of the boat, extended by at least one longitudinal edge (12) ending in a drawbar (13) comprising an operating handle (132), the longitudinal edge (12) being arranged transversely, or generally transversely, with respect to the axle of the supporting undercarriage (11), said supporting undercarriage (11) comprising
- a support frame (111), in particular a tubular frame, arranged transversely with respect to the longitudinal axle of the trailer, **characterized in that** the supporting undercarriage (11) further comprises:
- at least one sealed electric motor (14), in particular a geared motor unit, fixed to the frame (111),
- two sets of wheels (112, 113) arranged on the supporting undercarriage, each wheel assembly comprising at least two different wheels,
- the longitudinal edge (12) being fixed to the frame (111) of the supporting undercarriage (11) by its opposite end to the one extended by the drawbar (13), said drawbar (13) comprising control means (83) to control the operation of the sealed electric motor (14).

2. The trailer according to claim 1, **characterized in that** the support frame (111) comprises at least one reinforcing portion (509) which extends above the motor (14) and/or a reinforcing portion (510a, 510b) which extends above the wheels (112, 113).

3. The trailer according to claim 1 or 2, **characterized in that** the drawbar (13) comprises a sealed housing with a closure (508) which provides access to at least one battery for powering the motor.

4. The trailer according to one of claims 1 to 3, **characterized in that** a geared motor unit which contains the sealed electric motor (14), fixed to the frame (111), comprising two transmission shafts (26, 27) permanently engaged on the geared motor unit (14), arranged laterally, each transmission shaft having one end connected to the geared motor unit (14) and one end in the vicinity of which it is fixed on the frame (111) in such a manner as to be able to rotate freely on itself.

5. The trailer according to claim 4, **characterized in that** at least two wheels, in particular two sets of wheels (112, 113), are each mounted on the end of a transmission shaft (26, 27) in such a manner as to be able to rotate freely about said shaft.

6. The trailer according to claim 5, **characterized in that** it comprises coupling means (31, 32) mounted on each of the sets of wheels (112, 113) and configured to allow the operator to make each of the sets of wheels (112, 113) rotationally fixed to the transmission shaft (26, 27) at the end of which it is mounted or, conversely, to make said set of wheels (112, 113) freely rotatable about said shaft.

7. The trailer according to one of claims 1 to 6, **characterized in that** the control means (83) for controlling the operation of the sealed electric motor (14) are actuated by at least one operating handle (132) .

8. The trailer according to one of claims 4 to 6, **characterized in that** it further comprises a differential coupled to the geared motor unit (14) upstream of the transmission shafts (26, 27) or directly integrated in the geared motor unit.

9. The trailer according to claim 3, **characterized in that** the casing comprises a lock (505, 506), in particular a combination lock, to lock the closure.

10. The trailer according to one of claims 3 or 9, **characterized in that** a main switch (507) is placed in a compartment (82) of the casing.
